# EUROPEAN PATENT SPECIFICATION

(11) **EP 1 360 249 B1**
(45) Date of publication and mention of the grant of the patent: **18.08.2004**
(21) Application number: 01906430.2
(22) Date of filing: 01.02.2001
(51) Int. Cl.: C09D 163/00, C09D 5/16

(54) **UNDERWATER COATING BASED ON EPOXY**
ANWUCHSVERHINDERNDE EPOXIDBESCHICHTUNG
REVETEMENT SOUS-MARIN A BASE D'EPOXY

(43) Date of publication of application: 12.11.2003
(73) Proprietor: Streng, Theodorus Wilhelmus, 2771 LH Boskoop (NL)
(72) Inventor: Streng, Theodorus Wilhelmus, 2771 LH Boskoop (NL)
(74) Representative: Prins, Adrianus Willem, Mr. Ir.
(86) International application number: PCT/NL2001/000070
(87) International publication number: WO 2002/077112

(56) References cited:
- EP-A- 0 247 019
- WO-A-97/35931
- NL-A- 6 915 553
- TORRIANO G: "Formulation of epoxy-tar marine paints" CHEMICAL ABSTRACTS + INDEXES, AMERICAN CHEMICAL SOCIETY. COLUMBUS, US, vol. 76, no. 22, 29 May 1972 (1972-05-29), page 115 XP002133860 ISSN: 0009-2258 cited in the application

## Description

This invention relates to antifouling and anticorrosive coating compositions based on epoxy. It is known to provide metal and plastic surfaces intended for underwater use, such as ships, bridges, locks and the like, with a coating preventing the growth of algae and the like on the surface. Such coatings are provided with materials having a biocidal effect on the materials capable of growing thereon. It often involves copper and related compounds, as well as organotin compounds.

In the past tar products, such as coal tar, were used as base layer, in or on which the antifouling component was applied. These products provide good adhesion to the ground, while they also formed a good basis for the antifouling component. Also, these products give good protection against corrosion. The use of tar products, however, is subject to restrictions, because of the environmental impact of tar products.

It has already been proposed to use epoxy resins, mixed or not mixed with tar products or other thermoplastic materials, as base layer for applying an antifouling coating. It has also been proposed to incorporate the antifouling materials in the mentioned base layer. In view of the fact that the antifouling effect of living organisms on underwater surfaces of structures is based on the lixiviation of the biocidal materials, there is an increasing desire to reduce the proportion of toxic materials in the coating or to change to less toxic materials. These, however, inherently have the drawback that they are less effective.

One of the objects of the present invention is therefore to provide an epoxy resin-based coating composition having anticorrosive and antifouling properties without the drawbacks of the known systems. More in particular, it is a desire to provide a coating composition containing no or substantially no toxic components, such as biocidal materials, coal tar and large amounts of solvent. It is further a desire to provide a coating composition of such structure that no toxic materials are lixiviated, so that the composition is also suitable for use as coating of surfaces, which may come into contact with foodstuffs.

Surprisingly, it has been found that by suitably selecting an epoxy resin/hardener system, thermoplastic copolymer of an aromatic C9/C10 fraction, retardant for the hardening, and filler an inherently antifouling and anticorrosive coating can be obtained. The invention therefore relates to an antifouling and anticorrosive coating composition based on epoxy, which coating is substantially free from solvents, coal tar and biocides, at least comprising an epoxy resin, a hardener therefor, a hardening-retardant compound, a thermoplastic hydrocarbon resin based on a copolymerized aromatic C9/C10 hydrocarbon fraction, colorant and filler.

Surprisingly, it has been found that with this composition, after applying and hardening on the surface, a coating is obtained which is antifouling, without requiring the incorporation of a biocide or other antifouling components. Moreover, the composition according to the invention provides a coating having a great hardness, while it is yet flexible. Thus, the invention is particularly suitable for use on objects or constructions, which are subject to weather conditions, such as in navigation, bridges, concrete constructions and the like. In view of the literature in this art (see, for instance, EP-A-0 247 019, NL-A-6915553, WO-A-97/35931 and Chemical Abstracts No. 128914n), according to which antifouling compositions always contain at least one toxic component, it is very surprising that this composition has the desired functionality with respect to antifouling.

Essential components in the composition are the epoxy resin/hardener combination, which may be based on a conventional bisphenol A system with hardener. Examples are the conventional epicoat epoxy resins. The composition further contains an amount of an aromatic hydrocarbon resin, optionally a small amount of solvent, a diluent and as important component one or more fillers.

The aromatic hydrocarbon resin consists of a copolymerized C9/C10 hydrocarbon fraction, which is a product from the cracking of petroleum and/or naphtha. This fraction particularly consists of condensed or noncondensed aromatic compounds having an average of 9 or 10 carbon atoms. The copolymerization is standard effected via the unsaturation present in the aromatic compounds. The amount of this hydrocarbon fraction is preferably 1 to 25 wt.%. Another important component in the composition is the retardant for the hardening. This retardant is present in such an amount that an open time or "potlife" is obtained of at least 4 hours. To this end, the conventional commercially sold retardants may be used. Preferred, however, are glycol ethers, since it has been found that, on the one hand, they have a good effect on the retarding, without deterioration of the quality of the coating layer. Probably, it is even so that through the presence of this component the quality of the layer is improved. Suitable amounts for this component are between 1 and 12.5 wt.%, all based on the total weight of the composition.

Also incorporated in the composition are one or more fillers. Preferably, this is a combination of a number of fillers. More in particular, it is preferred to use a combination of lamellar fillers and powdered fillers. The first group is, for instance, formed by mica, talc, glimmer, brucite- and chlorite-like materials, while the second group is formed by substances, such as alumina, silica, silica alumina, quartz meal and the like. Both for the lamellar and for the particulate filler it holds that it is preferred that the average particle size is less than 20 µm, preferably less than 10 µm. In general, the aim is that the screen residue on a screen of 30 µm is not more than 5%, based on weight. The amount of filler is generally not more than half of the weight of the composition. From practical considerations (cost price, processability) the minimum is 15 wt.%.

If desired, the resin composition also contains a colorant. Depending on the intended application, a suitable colorant may be selected, in which connection it is preferred if the colorant is resistant to the action of chloride. The amount thereof is strongly dependent on the nature of the colorant, but will generally not be more than 5 wt.%.

The coating composition is, as conventional in this type of compositions, distributed over two components. One component contains the epoxy resin, while the other component contains the hardener. The other ingredients are distributed over the two components, depending on different factors, such as viscosity, shelf life etc.

The coating composition according to the present invention is, as stated, suitable as antifouling coating. However, it is also suitable as anticorrosion treatment for different metal surfaces, steel constructions, ships for seagoing and inland navigation, steel constructions for seagoing and inland navigation, roofing and for those situations in which metal surfaces are to be provided with a coating which is allowed to come into contact with foodstuffs. Also, the composition according to the invention is very suitable for use as anti-osmosis agent on polyester surfaces, such as those of polyester ships.

More in particular, the coating composition has the advantage that it excellently adheres to existing coating layers, which are often based on tar products, coal tar, bitumen, and tar-containing paint layers. This has the great advantage that the old layer need not be removed.

Since the coating also has a vapor-inhibiting effect and even can completely seal, application thereof on old layers also prevents the risk that solvent residues or other harmful components still present, such as polycyclic aromatic hydrocarbons, may be diffused out of the old layer and find their way into the environment.

The invention will now be explained with reference to an example

### Example

A composition consisting of :
50 wt.% epoxy resin and hardener
10 wt.% retardant
5 wt.% solvent
200 wt.% filler
15 wt.% thermoplastic copolymerized C9/C10 resin
was made as two-component coating. After mixing the components a liquid system was obtained which remained processable for four hours. After application thereof on an existing coal tar layer, a dense coating was obtained, which had a good anticorrosive effect, and which was hardened after 8 hours.

## Claims

1. Use of a coating composition based on epoxy, which coating is substantially free from solvents, coal tar and biocides, said coating at least comprising an epoxy resin, a hardener therefor, a hardening-retardant compound, a thermoplastic hydrocarbon resin based on a copolymerized aromatic C9/C10 hydrocarbon fraction, optionally colorant, and filler as antifouling coating on metal objects.

2. Use according to claim 1, **characterized in that** the filler is selected from powdered, lamellar fillers and combinations thereof.

3. Use according to claim 2, **characterized in that** the lamellar filler comprises mica, talc, glimmer, chlorite and the like.

4. Use according to claim 2, **characterized in that** the powdered filler comprises alumina, quartz meal and combinations thereof.

5. Use according to claims 1-4, **characterized in that** at most 5 wt.% of a solvent is present in the uncured composition.

6. Use according to claim 5, **characterized in that** as solvent a ketone is present in the composition.

7. Use according to claims 1-6, **characterized in that** a colorant is present, which is resistant to the action of chloride.

8. Use according to claims 1-7, **characterized in that** the composition comprises:
25-60 wt.% epoxy resin and hardener
2-10 wt.% retardant
0-5 wt.% solvent
25-50 wt.% filler
3-15 wt.% thermoplastic copolymerized C9/C10 resin.

## Patentansprüche

1. Verwendung einer Beschichtungszusammensetzung auf Epoxidharz-Basis, wobei die Beschlchtung im Wesentlichen frei von Lösungsmitteln, Kahlenteer und Bioziden ist, wobei die Beschichtung als anwuchsverhindernde Beschichtung auf Metallgegenständen mindestens Folgendes aufweist: ein Epoxidharz, einen Härter dafür, eine Aushärtungsverzögerungsverbindung, ein thermoplastisches Kohlenwasserstoffharz, das auf einer copolymerisierten aromatischen C9/C10-Kohlenwasserstofffraktion basiert, wahlweise Färbemittel, und Füllstoff.

2. Verwendung nach Anspruch 1, **dadurch gekennzeichnet, dass** der Füllstoff aus pulverisierten lamellaren Füllstoffen und Kombinationen davon gewählt ist.

3. Verwendung nach Anspruch 2, **dadurch gekennzeichnet, dass** der lamellare Füllstoff Mica, Talkum, Glimmer, Chlorit und dergleichen umfasst.

4. Verwendung nach Anspruch 2, **dadurch gekennzeichnet, dass** der pulverisierte Füllstoff Tonerde, Quarzmehl und Kombinationen davon umfasst.

5. Verwendung nach den Ansprüchen 1 - 4, **dadurch gekennzeichnet, dass** höchstens 5 Masse-% eines Lösungsmittels in der nichtausgehärteten Zusammensetzung vorhanden sind.

6. Verwendung nach Anspruch 5, **dadurch gekennzeichnet, dass** als Lösungsmittel ein Keton in der Zusammensetzung vorhanden ist.

7. verwendung nach den Ansprüchen 1 - 6, **dadurch gekennzeichnet, dass** ein Färbemittel vorhanden ist, das gegen die Wirkung von Chlorid beständlg Ist.

8. Verwendung nach den Ansprüchen 1 - 7, **dadurch gekennzeichnet, dass** die Zusammensetzung Folgendes aufweist:
25 - 60 Masse-% Epoxidharz und Härter,
2 - 10 Masse-% Verzögerungsmittel,
0 - 5 Masse-% Lösungsmittel,
25-50 Masse-% Füllstoff,
3-15 Masse-% thermoplastisches copolymerisiertes C9/C10-Harz.

## Revendications

1. Utilisation d'une composition de revêtement à base d'époxy, lequel revêtement est pratiquement exempt de solvants, de goudron de houille et de biocides, ledit revêtement comprenant au moins une résine époxy, un durcisseur pour celle-ci, un composant retardateur de durcissement, une résine d'hydrocarbure thermoplastique basée sur une fraction d'hydrocarbure en C9/C10 aromatique copolymérisé, optionnellement un colorant, et une charge en tant que revêtement antisalissures sur des objets métalliques.

2. Utilisation selon la revendication 1, **caractérisée en ce que** la charge est sélectionnée parmi des charges en poudres, lamellaires et des combinaisons de celles-ci.

3. Utilisation selon la revendication 2, **caractérisé en ce que** la charge lamellaire comprend un mica, du talc, du mica glimmer, du chlorite et autres.

4. Utilisation selon la revendication 2, **caractérisée en ce que** la charge en poudre comprend de l'alumine, de la poudre de quartz et des combinaisons de celles-ci.

5. Utilisation selon les revendications 1 à 4, **caractérisée en ce qu'**au plus 5 % en poids d'un solvant sont présents dans la composition non durcie.

6. Utilisation selon la revendication 5, **caractérisée en ce que**, en tant que solvant, une cétone est présente dans la composition.

7. Utilisation selon les revendications 1 à 6, **caractérisée en ce qu'**un colorant est présent, lequel est résistant à l'action du chlorure.

8. Utilisation selon la revendication 1 à 7, **caractérisée en ce que** la composition comprend :
de 25 à 60 % en poids de résine époxy et de durcisseur
de 2 à 10 % en poids de retardant
de 0 à 5 % en poids de solvant
de 25 à 50 % en poids de charge
de 3 à 15 % en poids de résine en C9/C10 copolymérisée thermoplastique.
